# EUROPEAN PATENT APPLICATION

(11) **EP 4 425 284 A1**
(43) Date of publication of application: **04.09.2024**
(21) Application number: 23159670.1
(22) Date of filing: 02.03.2023
(51) Int. Cl.: G05B 19/4099, B25J 9/16

(54) **OBJECT MANUFACTURED AS PHYSICAL REPRESENTATION OF MESH MODEL**

(71) Applicant: The Venture Repository B.V., 6191 LE Beek (NL)
(72) Inventor: VROEMEN, Tom Anna Hubertus, 6191 LE Beek (NL)
(74) Representative: DeltaPatents B.V.

(57) **Abstract**

A method and system are provided for manufacturing an object using a mechatronic positioning system comprising an end effector (110). The object may be manufactured as a physical representation of a volumetric mesh model by:
a. providing a rod (142) to physically represent an edge of the mesh model;
b. with the end effector, causing the rod to assume a position and orientation relative to a previously manufactured part of the object at which position an end (144) of the rod contacts or is in welding proximity of an end of at least one previous rod of the previously manufactured part of the object;
c. welding the end of the rod to the end of the at least one previous rod to physically establish a node connecting two or more edges of the mesh model;
and repeating steps a) - c) for respective edges and nodes of the mesh model to iteratively build up the physical representation of the mesh model.

## Description

### FIELD OF THE INVENTION

The invention relates to a method for manufacturing an object. The invention further relates to a control system to control a mechatronic positioning system to manufacture the object. The invention further relates to a system comprising the control system and the mechatronic positioning system, and to the manufactured object.

### BACKGROUND OF THE INVENTION

Additive manufacturing has become a popular technique to manufacture 3D objects as it allows an object to be quickly generated from a computer-readable design of the object. Additive manufacturing may involve additive deposition, additive agglomeration, or additive layering, e.g., by 3D printing, stereolithography or selective laser sintering.

There is also a trend towards more lightweight objects. One advantage of lightweight objects is that they require less energy to be moved. If such an object is used in a vehicle, such as a car, bicycle, ship, airplane, spacecraft, etc., this may reduce the energy consumption of the vehicle. A related advantage is that the energy requirements of transporting these objects from the factory to the end-user may be reduced. Conventionally, the weight of an object may be reduced by designing the object to be more lightweight, e.g., by selecting lightweight base materials, reducing the physical footprint of the object, etc.

It is also known to make objects more lightweight by making interior volumes of an object hollow instead of solid, which has the additional advantage that less raw material may be required to manufacture the object. For example, US2022203621A1 describes a method for lightweighting an additively manufactured article, the article comprising one or more integral article parts each with a structure, the method comprising infilling and/or building each of the one or more integral article parts with a quasi-crystalline structure. The quasi-crystalline structure is a three-dimensional quasi crystal which may be made from two or more types of cells in the shape of rhomboids. One or more cells being in the shape of rhomboids may be bisected in a manner that faces resulting from the bisection have a hexagonal form, thereby creating two monotriatruncated tetrahedra out of each cell.

A disadvantage of making lightweight objects with additive manufacturing, as done by US2022203621A1, is that additive manufacturing may requires the base material to be melted, or at least to be brought into a liquid or malleable state, before being added to the object in a layered manner. This may impose limitations on the materials which can be used, reduce the speed of manufacture, affect the strength of the manufactured object, etc. Another disadvantage is the energy use of additive manufacturing, which may be caused by all base material of an additively manufactured object having to be melted or brought into a liquid or malleable state. This energy use may in some situations be too high, e.g., when it is desired to manufacture an object using only solar energy, e.g., for manufacture in space.

### SUMMARY OF THE INVENTION

It is therefore an object of the invention to provide a method and system for manufacturing an object which is lightweight by being partially hollow and which method and system address one or more of the disadvantages of the use of additive manufacturing.

In accordance with a first aspect of the invention, a method is provided for manufacturing an object. The method comprises:
- accessing data or instructions which define a structure of a mesh model, wherein the mesh model is a volumetric mesh model comprising mesh elements which define a surface of the object and which fill at least part of an interior volume of the object, wherein the mesh elements comprise edges which are connected to each other via respective nodes;
- providing a mechatronic positioning system comprising an end effector;
- using the mechatronic positioning system, manufacturing the object as a physical representation of the mesh model by:
   a. providing a rod to physically represent an edge of the mesh model;
   b. with the end effector, causing the rod to assume a position and orientation relative to a previously manufactured part of the object at which position an end of the rod contacts or is in welding proximity of an end of at least one previous rod of the previously manufactured part of the object;
   c. welding the end of the rod to the end of the at least one previous rod to physically establish a node connecting two or more edges of the mesh model;
and repeating steps a) - c) for respective edges and nodes of the mesh model to iteratively build up the physical representation of the mesh model.

In accordance with a further aspect of the invention, a control system is provided for controlling a mechatronic positioning system to manufacture an object. The control system comprises:
- an input interface for accessing data or instructions which define a structure of a mesh model, wherein the mesh model is a volumetric mesh model comprising mesh elements which define a surface of the object and which fill at least part of an interior volume of the object, wherein the mesh elements comprise edges which are connected to each other via respective nodes;
- a control interface to the mechatronic positioning system;
- a processor subsystem configured to, via the control interface, control the mechatronic positioning system to manufacture the object as a physical representation of the mesh model, wherein the mechatronic positioning system comprises an end effector, and wherein the control of the mechatronic positioning system comprises:
   a. with the end effector, holding a rod, wherein the rod physically represents an edge of the mesh model;
   b. with the end effector, causing the rod to assume a position and orientation relative to a previously manufactured part of the object at which position an end of the rod contacts or is in welding proximity of an end of at least one previous rod of the previously manufactured part of the object; and
   c. welding the end of the rod to the end of the at least one previous to physically establish a node connecting two or more edges of the mesh model;
and repeating steps a) - c) for respective edges and nodes of the mesh model to iteratively build up the physical representation of the mesh model.

In accordance with a further aspect of the invention, a system is provided comprising the control system and the mechatronic positioning system.

In accordance with a further aspect of the invention, an object is provided which is obtained or obtainable by a method of manufacturing described in this specification.

In accordance with a further aspect of the invention, an object is provided which is manufactured as a physical representation of a volumetric mesh model, wherein the volumetric mesh model comprises mesh elements which define a surface of the object and which fill at least part of an interior volume of the object, wherein the mesh elements comprise edges which are connected to each other via respective nodes, wherein the edges are physically represented in the object by rods and the rods are welded together at their respective ends to physically establish the nodes connecting the edges of the mesh model.

The above measures involve manufacturing a physical object. For that purpose, a digital representation of the object is provided in form of a mesh model. Mesh models are known per se and are typically comprised of mesh elements. A mesh element may comprise edges which are connected to other edges of the mesh element and/or to edges of other mesh elements via respective nodes. The nodes of the mesh model may therefore represent connection points between the edges. In accordance with the above measures, the digital design of the object is provided as a volumetric mesh model. A volumetric mesh model may, in addition to modelling one or more inner and/or outer surfaces of the object, model an interior of the object. In particular, in the volumetric mesh model, mesh elements may fill-in at least part of an interior volume of the object. This means that interior parts of the object, which in a conventional version of the physical object may for example be solid or densely filled interior parts and which in a surface model may simply be hollow or not filled, may be represented in the mesh model by a volume of mesh elements. As these mesh elements are typically interconnected with each other, a three-dimensional mesh structure may be formed which fills the one or more interior volumes of the object.

The object is manufactured as a physical representation of the mesh model. For that purpose, the physical representation of the mesh model is iteratively built up by using rods for the edges of the mesh model and by welding ends of the rods together, with the welded interconnection points between the rods acting as the physical representations of the nodes of the mesh model. In particular, the iterative manufacture may involve using a mechatronic positioning system which, at a particular iteration of the manufacturing process, may hold a rod, position and orient the rod to a position at which an end of the rod is in contact with an end of a rod of the object part manufactured thus far, or in contact with the ends of multiple rods of the object part, and by welding the respective ends of the rods together, for example using a welding device. These steps may be repeated for respective edges of the mesh model, thereby building up the object in an iterative manner. The mechatronic positioning system may be controlled based on data or instructions which define the structure of the volumetric mesh model to be manufactured, for example by accessing a list of edges and nodes of the mesh model and their relative coordinates.

In this respect, it is noted that the ends of the rods may, instead of being brought into contact with each other, also be brought in welding proximity of each other, with the term 'welding proximity' referring to a proximity at which the respective ends may be welded together. Such welding proximity may depend on the rod's material and welding technique and may be easily determined given a selected material and welding technique.

The above measures have the effect that the object is manufactured as a physical representation of a volumetric mesh model. Such a volumetric mesh model is relatively sparse as its interior volumes are filled with mesh elements which themselves are sparse, e.g., by being comprised only or primarily of edges and nodes. In particular, by using rods for the edges, elongated physical elements are used which results in the interior of the object to remain largely empty. Nevertheless, by providing an interior volumetric mesh, the object may be provided with the necessary stability and load baring capacity, which may otherwise be lacking if the object were a physical representation of a surface mesh model.

By using rods as the edges, it is not necessary to iteratively build-up the edges themselves, as would for example be needed when using additive manufacturing. In other words, the rods themselves may be premanufactured and can be simply assembled, and where needed, straightened and/or cut into the correct length, during the manufacture of the object. This may speed up the manufacture of the object compared to a manufacturing technique in which the edges themselves need to be manufactured onsite, as only the connection between the edges needs to be established during the manufacture by welding, but not the edges themselves. In addition, rods which are premanufactured may be stronger than rods which are iteratively built-up using additive manufacturing, which may contribute to the overall strength of the object. Furthermore, the rods may be of any suitable material for which a welding technique exists, which may provide a choice of a wide range of materials. Yet another advantage may be that not all of the base material of the object may have to be melted or brought into a liquid or malleable state during manufacture. Rather, it may suffice for the ends of the rods to be melted during welding. This way, the manufacture may take place in situations where low energy consumption is especially relevant, e.g., in space.

The following optional aspects of the invention, which may be described with reference to the method of manufacturing the object, equally apply to the system for manufacturing the object and to the manufactured object.

Optionally, the method further comprises providing the rod in form of a rod segment having a length which corresponds to a relative length of the edge in the mesh model. The rods handled by the mechatronic positioning system may be provided in the correct length, meaning a length which corresponds, at least proportionally, to a length of a corresponding edge of the mesh model. This way, the rods may only need to be held at the desired position and orientation and then welded, thereby avoiding a need to cut the rod into the correct length or otherwise needing to establish the correct length during manufacturing.

Optionally, the method further comprises:
- providing the rod at an extended length; and
- after welding the end of the rod to the end of the at least one previous rod, cutting the rod to a length which corresponds to a relative length of the edge in the mesh model.

It may be advantageous to provide rods at an extended length and cut them to the desired length after welding. Namely, the rods may be cut to the correct length in an efficient manner during the manufacturing itself. This may reduce the complexity of supplying the rods, e.g., by not having to consider the required length of the rods, and avoid the need to pick-up a specific rod at the correct length with the mechatronic positioning system.

Optionally, the method further comprises cutting the rod using a welding device which is also used to weld the end of the rod to the end of the at least one previous rod. A rod having an extended length, meaning that the rod is longer than needed, may be efficiently cut to the desired length using a welding device. It may be particularly advantageous to use the same welding device which is also used to weld the ends of the rods together as this may avoid the need for another cutting device during manufacturing.

Optionally, the method further comprises, after welding the end of the rod to the end of the at least one previous rod, determining a relative position of said welded ends of the rods relative to the previously manufactured part of the object, for example using a camera and a computer-vision algorithm, comparing the relative position of the welded ends of the rods to a relative position of the corresponding node relative to the mesh model, and if a difference in said relative positions is deemed to be too large, e.g., by the difference exceeding a relative or absolute threshold, providing a next rod with an adapted length so as to compensate at least in part for the difference. The position of the node with respect to the mesh model may represent a relative target position for the welding point with respect to the object manufactured thus far. Here, the term 'welding point' refers to a point at which the ends of the rods are welded together. By comparing the actual position to this target position, deviations from the target position may be detected and compensated for. For example, in addition to adjusting a position and orientation of a next rod, the length of the next rod may be adapted, e.g., by suitably cutting wire rod from a wire spool to obtain the desired length of the next rod. This way, the method and system may compensate for inaccuracies during the manufacture, e.g., due to manufacturing tolerances in the length of the rods, due to limits in the positioning accuracy of the mechatronic positioning system, due to inaccuracies caused by the welding etc. In particular, it may be avoided that such inaccuracies accrue during the manufacture which may otherwise result in unacceptable deviations at the end of the manufacture, which may then result in the size and/or shape of the manufactured object being incorrect, the strength of the object being insufficient, etc.

Optionally, the rod is provided as a wire rod, for example obtained from a wire wound on a wire spool. The rod may be a wire rod, referring to a rod which is formed by a wire, such as a steel wire. Wire rod may be efficiently supplied, for example by a wire spool.

Optionally, the rod is provided as a tubular rod, i.e., as a tube, and thereby as a hollow element. This may reduce the amount of raw material which is required to manufacture the object, the overall weight of the object, and/or the energy consumption of the manufacture, e.g., as less material may need to be melted during welding.

Optionally, the method further comprises straightening the rod before use. To reduce the chance of the rods buckling under an external force, the rod is preferably as straight as possible. To ensure the straightness of the rod, the rod may be straightened before use. This may be particularly advantageous if the rod is obtained from a wire spool.

Optionally, the method further comprises welding the end of the rod to the end of the at least one previous rod using a welding device, such as a laser configured to emit a laser beam or a welding torch configured for arc welding, for example for Tungsten Inert Gas (TIG) welding or Metal Inert Gas (MIG) welding. Welding by laser beam and arc welding are both examples of suitable welding techniques. Laser welding has been found to be advantageous as it is a quick and efficient welding technique and it is not required for the laser to be in physical proximity to the edges to be welded. Rather, it may suffice for the laser beam to have a line of sight to the edges to be welded. This may facilitate the welding process as the welding device does not have be brought nearby the edges to be welded.

Optionally, the welding device is held by or mounted to the mechatronic positioning system. This way, the same mechatronic positioning system which is used to position and orient the rods may be used to position and orient the welding device. It will be appreciated that if the mechatronic positioning system comprises one robotic arm, both the end effector holding the rods and the welding device may be mounted to the same robotic arm. However, this is not a limitation, as the mechatronic positioning system may also comprise multiple robotic arms, or in general multiple mechatronic subunits, with one robotic arm or mechatronic subunit comprising the end effector to hold, position, and orient the rods and another robotic arm or mechatronic subunit holding the welding device.

Optionally, the welding device is mounted to the mechatronic positioning system at a mounting position and mounting orientation at which the welding device has a line of sight to the end of the rod held by the mechatronic positioning system. The welding device may be mounted such to the mechatronic positioning system that it, at least during normal operations, permanently has a line of sight to the end of a rod held by the mechatronic positioning system. This way, additional steps which would otherwise be needed to position the welding device may be omitted, which speeds up the manufacturing.

Optionally, the method further comprises generating the volumetric mesh model of the object by:
- accessing a 3D model of the object, for example in form of a surface model;
- using a meshing algorithm, generating the volumetric mesh model of the object.

The volumetric mesh model may be generated for the purpose of manufacturing the object from another type of 3D model, for example from a 3D surface mesh model of the object or a 3D CAD model. This other type of 3D model may then be converted into a volumetric mesh model by using a meshing technique. Such meshing may for example make use of a finite element method (FEM) technique.

Optionally, the method further comprises obtaining at least one parameter defining a target strength and/or target surface quality of the mesh model and using the at least one parameter as a target in the meshing method. The meshing may be steered by parameter(s) which may for example affect a surface quality, such as a smoothness of the surface, and a target strength of the mesh model. For example, the parameter(s) may determine which type of mesh element to use, the size and thereby density of mesh elements per volume unit, etc. The values of the parameter(s) may be chosen so as to establish the physical object at the required strength and/or surface quality. This way, it may for example be ensured that a chair which is manufactured as a physical representation of a volumetric mesh model of the chair has sufficient strength to carry a human person.

Optionally, the method further comprises generating a sequence in which rods of the physical representation of the object are to be welded to each other, wherein the sequence is generated such that intermediates of the object are structurally stable and/or the end effector is positionable to position and orient the end of the rod to contact or be in welding proximity of the end of the at least one previous rod without being obstructed by other previous rods of the previously manufactured part of the object. The object may be iteratively built-up in such a way that intermediates of the object are structurally stable and/or to avoid the end-effector being obstructed during the positioning and orienting of rods. This may be effected by suitably choosing the sequence in which the rods are to be welded.

Optionally, the mesh model comprises an unstructured mesh or a structured mesh. Unstructured meshes may be better suitable to model complex geometries while structured meshes may be easier to generate, e.g., using a meshing technique.

Optionally, the mesh model comprises or is comprised of tetrahedra mesh elements. A tetrahedra is well suited to represent complex structures. However, other types of mesh elements may be used as well, such as hexahedral mesh elements.

Optionally, the rod comprises or consists of a metal, a polymer, or a biomaterial which is weldable by melting. Examples of suitable metals include, but are not limited to, carbon steel, stainless steel, iron, aluminum, or brass. Examples of suitable polymers include, but are not limited to thermoplastics, for example acrylic, polyester, polypropylene, polystyrene, nylon, Teflon.

The following optional aspects of the invention, which may be described with reference to the system of manufacturing the object, equally apply to the method for manufacturing the object and to the manufactured object.

Optionally, the processor subsystem is configured to cause the rod to assume the position and orientation relative to the previously manufactured part of the object by one or more of:
- positioning and/or orienting the previously manufactured part of the object relative to the rod;
- positioning and/or orienting the rod relative to the previously manufactured part of the object;
- positioning and/or orienting the previously manufactured part of the object and the rod relative to each other.

It will be appreciated that the rod may be brought into the desired position and orientation by moving the rod, by moving the object part manufactured thus far, or by moving both entities with respect to each other. Which technique is chosen may depend on, for example, the type of mechatronic system (e.g., the number of robotic arms).

Optionally, the mechatronic positioning system comprises one or more robotic arms. For example, the mechatronic positioning system may comprise one robotic arm, such as a six-axis articulated arm, which is used for holding, positioning, and orienting the rods and for welding. In another example, in addition to the aforementioned use of the first robotic arm, the welding is performed by a second robotic arm. In yet a third example, addition to the aforementioned use of the first robotic arm and the second robotic arm, the object part manufactured thus far may be positioned and/or oriented by a third robotic arm.

It will be appreciated by those skilled in the art that two or more of the above-mentioned embodiments, implementations, and/or optional aspects of the invention may be combined in any way deemed useful.

Modifications and variations of any system, method, or object, which correspond to the described modifications and variations of another one of said entities, can be carried out by a person skilled in the art on the basis of the present description.

### BRIEF DESCRIPTION OF THE DRAWINGS

These and other aspects of the invention will be apparent from and elucidated further with reference to the embodiments described by way of example in the following description and with reference to the accompanying drawings, in which
Fig. 1 shows a robotic arm which is controlled by a control system to manufacture an object by as a physical representation of a volumetric mesh model;
Figs. 2A-2F illustrate how a volumetric mesh model of an object may be generated, with the object being in this example a chair, wherein:

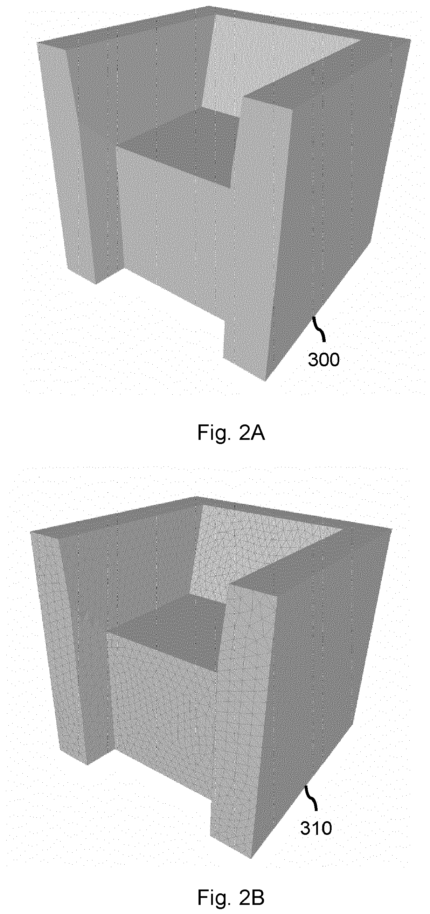

Fig. 2A shows a three-dimensional model of a chair;
Fig. 2B shows a surface mesh model of the chair;

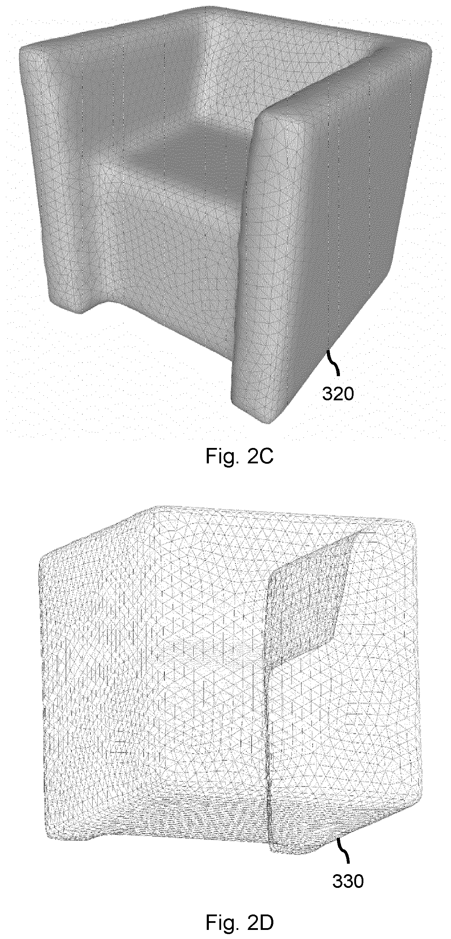

Fig. 2C shows an optimized version of the surface mesh model;
Fig. 2D shows a translucent version of the optimized surface mesh model;

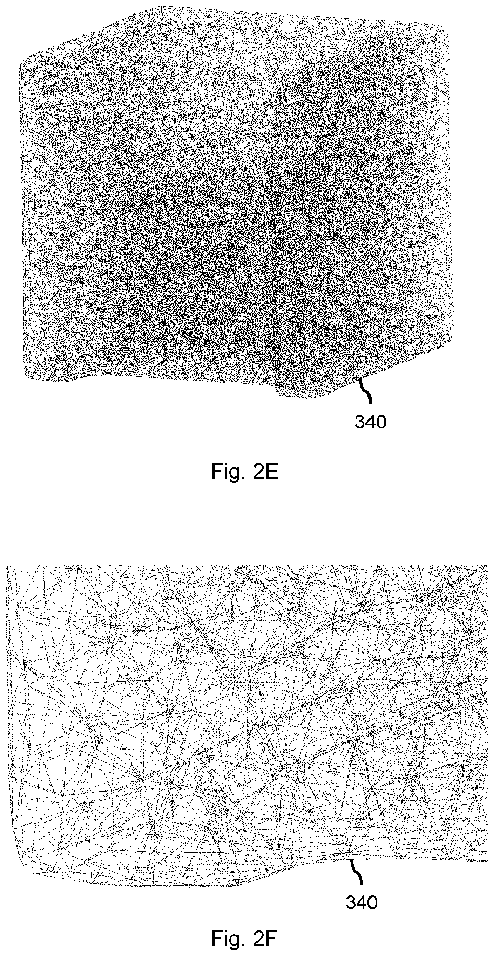

Fig. 2E shows a volumetric metric mesh model which is obtained by applying a meshing algorithm to the optimized surface mesh model;
Fig. 2F shows a zoomed-in part of the volumetric mesh model;

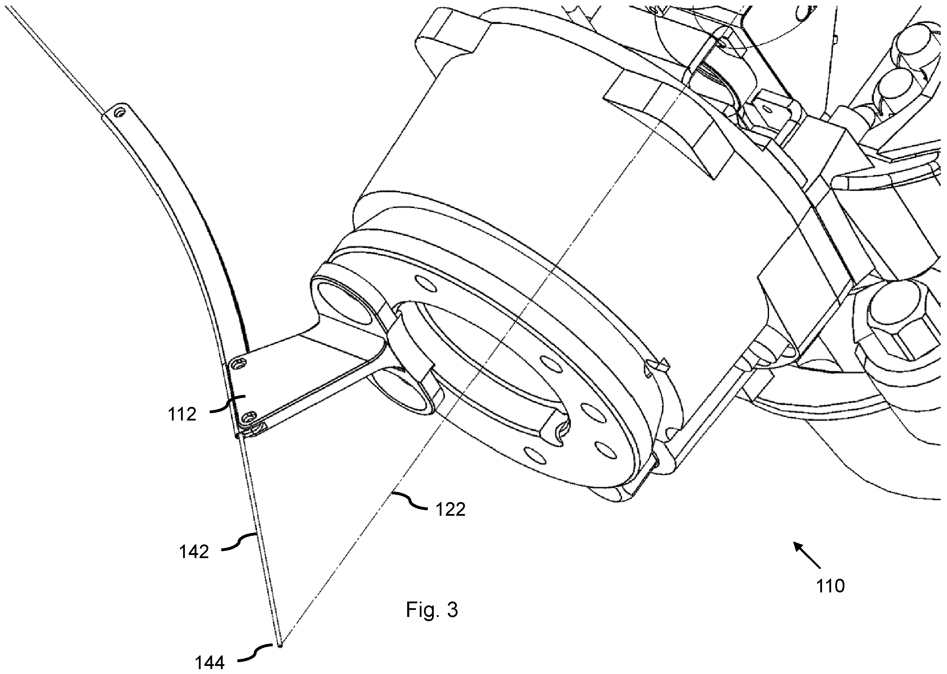

Fig. 3 shows a detailed view of an end effector of a robotic arm which is configured to hold a wire rod, whilst showing a laser beam which is emitted by a laser and delivered by a laser beam delivery system mounted to the robotic arm and used for cutting and welding the wire rod.

It should be noted that the figures are purely diagrammatic and not drawn to scale. In the figures, elements which correspond to elements already described may have the same reference numerals.

### List of reference numbers and abbreviations

The following list of reference numbers is provided for facilitating the interpretation of the drawings and shall not be construed as limiting the claims.
- 100: robotic arm
- 110: end effector
- 112: wire rod guide
- 120: laser beam delivery system
- 122: laser beam
- 140: spool of wire rod
- 142: wire rod segment
- 144: wire rod end
- 150: straightener

- 200: control system
- 210: input interface;
- 220: control interface;
- 230: processor subsystem;
- 240: data storage

- 300: three-dimensional model of chair
- 310: surface model of chair
- 320: optimized surface model of chair
- 330: input to meshing algorithm
- 340: volumetric mesh model

### DETAILED DESCRIPTION OF EMBODIMENTS

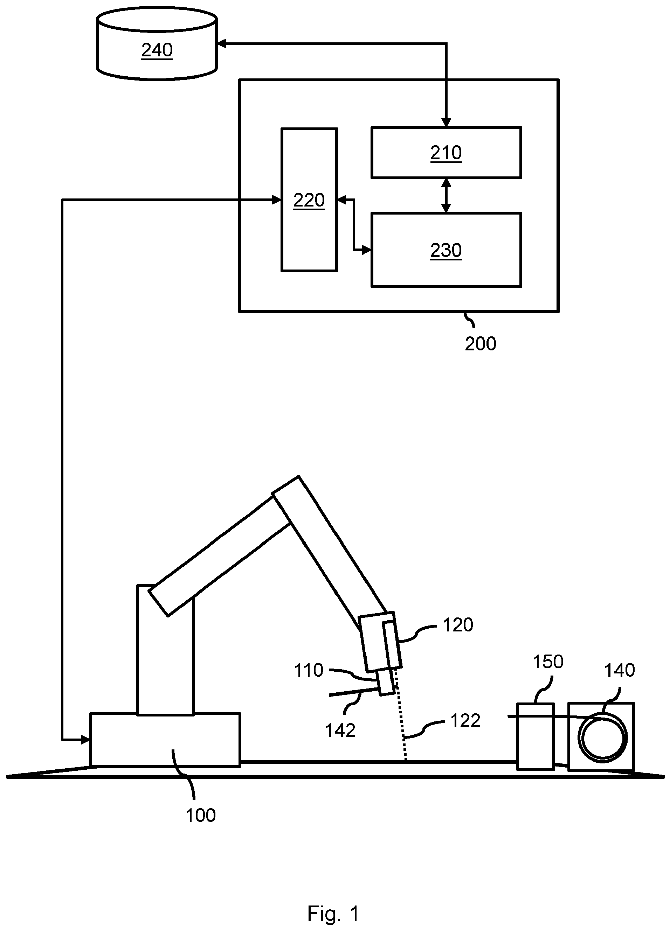

**Fig. 1** shows a control system 200 which is configured to control a mechatronic positioning system to manufacture an object. In this and the following examples, the mechatronic positioning system is shown to be a robotic arm 100 which comprises an end effector 110 to hold, position and orient held items, with the robotic arm 100 being in this example an articulated robotic arm having 6 degrees of freedom (DoF). However, this is not a limitation, since, as also discussed elsewhere in this specification, any other type of mechatronic positioning system may be used instead, such as for example a linear robot or a cartesian parallel manipulator or a cartesian X-Y-Z gantry robot. The control system 200 comprises an input interface 210 for accessing data or instructions for use in the manufacture. In the example of Fig. 1, the input interface 210 is shown to be an interface to an external data storage 240 which may store the data or instructions. For example, the external data storage 240 may be a network accessible data storage and the input interface 210 may be a network interface. However, the input interface 210 may also be an internal interface of the control system 200, for example a data storage interface to a hard disk, solid state disk or an array thereof.

The control system 200 may further comprise a control interface 220 to control the mechatronic positioning system, or specifically to control the robotic arm 100. Such a control interface may for example be a network interface, e.g., based on TCP/IP, a proprietary robot interface, or may in some cases be represented by current sources which may directly drive actuators of the robotic arm. In some cases, an additional actuation control unit may be provided, e.g., in a cabinet. Such a control unit may convert control commands generated by and received from the control system 200 into lower-level actuation commands or actuation currents which can be used to actuate the robotic arm 100.

The control system 200 may further comprise a processor subsystem 100, which is configured to, via the control interface 220, control the robotic arm 100 to manufacture the object. For that purpose, the processor subsystem 100 may access the aforementioned data or instructions, which define a structure of a mesh model. As will be further elucidated with reference to Figs. 2A-2F, the mesh model is a volumetric mesh model comprising mesh elements which define a surface of the object and which fill at least part of an interior volume of the object. Typically, the mesh elements comprise or consists of edges which are connected to each other via respective nodes. The processor subsystem 230 may be configured to control the robotic arm 100 to manufacture the object as a physical representation of the mesh model. For the purpose, the processor subsystem 230 may control the robotic arm to, a) with the end effector 110, hold a rod 142, wherein the rod 142 physically represents an edge of the mesh model, b) with the end effector 110, cause the rod 142 to assume a position and orientation relative to a previously manufactured part of the object at which position an end of the rod contacts or is in welding proximity of an end of at least one previous rod of the previously manufactured part of the object, and c) weld the end of the rod 142 to the end of the at least one previous to physically establish a node connecting two or more edges of the mesh model. The processor subsystem 230 may further control the robotic arm to repeat steps a) - c) for respective edges and nodes of the mesh model to iteratively build up the physical representation of the mesh model.

Fig. 1 further shows a number of entities which will be further elucidated elsewhere in this specification. Namely, a laser beam delivery device 120 is shown which is mounted to the robotic arm 100 and which is configured to deliver a laser beam 122 which is emitted by a laser. The laser may also be mounted to the robotic arm 100 but may also be provided in separation of the robotic arm. An example of a laser beam delivery device is an articulated mirror arm or a fiber-optical device, such as a fiber optic cable. Alternatively, the laser may be mounted to the robotic arm without the use of a laser beam delivery device. In a specific example, the laser may be a 1500W laser emitting at a 1070nm wavelength.

Also shown in Fig. 1 is a so-called wire station which is shown to comprise a spool of wire rod 140 and a straightener 150. In a specific example, the wire rod 140 may be AIS I316L. In a specific example, the wire rod may have a diameter of 1 mm-6mm.

**Figs. 2A-2F** illustrate how a volumetric mesh model of an object may be generated, with the object being in this example a chair. **Fig. 2A** shows a three-dimensional (3D) model 300 of the chair, which 3D model may be of any suitable type. **Fig. 2B** shows a surface mesh model 310 of the chair. Such a surface mesh model 310 may be obtained by conversion from the 3D model 300, unless the 3D model 300 is already obtained in the form of a surface mesh model, in which case a further conversion may not be needed. **Fig. 2C** shows an optimized version 320 of the surface mesh model. The optimization may in general comprise changing parts of the surface mesh model to achieve desired surface properties. Which surface properties are desirable may depend on the type of object and/or the application in which the object is to be used. For example, for a chair, it may be desirable that there are no sharp edges and that the chair is comfortable to be seated on. As such, the optimization may comprise smoothing sharp edges of the surface mesh model 310 of Fig. 2B to obtain the surface mesh model 320 of Fig. 2C. Another form of optimization may be changing the density of mesh elements, for example to have a higher density for surfaces which are to mimic solid surfaces. For example, in a chair, the seating area may normally be a solid surface. The density of mesh elements which represent the seating area in the surface mesh model 320 may therefore be increased so as to mimic this solid surface. In general, an optimization step is optional and may not be needed for a particular object.

**Fig. 2D** shows a translucent version 330 of the optimized surface mesh model of Fig. 2C. It can be seen that the interior volume of the chair is empty. **Fig. 2E** shows a volumetric mesh model 340 which may be obtained by applying a meshing algorithm to the optimized surface mesh model, or in general to any type of surface mesh model. Thereby, the interior volume of the chair is filled with a three-dimensional mesh structure. **Fig. 2F** which shows a zoomed-in part of the volumetric mesh model 340. Here, it can be seen that the mesh filling in the interior volume is a lattice structure, with the mesh elements being in this example tetrahedral mesh elements, or in other words, the volumetric mesh model 340 may be a tetrahedral mesh model. It is noted that alternatively, the volumetric mesh model may be comprised of other types of mesh elements, such as hexahedral mesh elements. The meshing algorithm may be steered by parameters which may affect various properties of the resulting volumetric mesh model. For example, the meshing algorithm may be steered by parameter(s) defining a target strength of the mesh model. Such parameter(s) may affect the density of mesh elements in the interior volume(s) of the object. Another example is that the meshing algorithm may be steered by parameter(s) defining target surface quality of the mesh model, which may affect the density of mesh elements on the surface of the object.

Having generated the volumetric mesh model, the volumetric mesh model may be converted into data or computer-readable instructions which can be further processed by the processor subsystem of the control system to manufacture a physical representation of the object. Alternatively, the meshing algorithm may directly output such data or computer-readable instructions. The data or computer-readable instructions may for example indicate a sequence in which rods of the physical representation of the object are to be welded to each other. This sequence may be generated such that intermediates of the object are structurally stable. Alternatively, or additionally, the sequence may be generated so that the end effector is able to assume the required positions and orientations during the manufacture of the object without being obstructed by the previously manufactured part of the object. An example of such data may be a map of nodes and edges. Such a map may be indicative of the positions and angles at which the rods have to be positioned and oriented so iteratively build-up the object in a manner that is structurally possible and collision free. In a specific example, such a map may be generated as follows. The aforementioned map may be an array sorted by build order with elements which may be defined by data [[x,y,z], [q1,q2,q3,q4], L]. The build order may be determined to build the object in a layered manner, e.g., from bottom to top or from top to bottom or from side to side, and to avoid collisions. Here, [x,y,z] may define a 3D cartesian coordinate and may determine where the robot should place the beginning of the wire rod. The quaternion [q1,q2,q3,q4] may determine the 3D angle at which the wire rod should be oriented. The value L may determine the length of the rod, and thereby determine where to cut the wire rod after welding. For example, the length L may determine how far the end effector should move from 3D cartesian coordinate [x,y,z,] in direction [q1,q2,q3,q4], along the wire rod before stopping and cutting the wire rod.

Using the aforementioned data or computer-readable instructions, the control system may, as a step in the iterative build-up of the object, control the robotic arm to provide a rod to physically represent an edge of the mesh model. **Fig. 3** shows a detailed view of an end effector 110 of a robotic arm which is configured to hold a rod in the form of a wire rod 142 which may be obtained from a wire rod spool (not shown in Fig. 3). In order to hold the wire rod 142, the end effector 110 may be provided with a guiding element in form of a wire rod guide 120 through which the wire rod 142 can slidingly fit. The wire rod guide 120 may provide sufficient friction so that the wire rod 142 is held in position when the end effector 100 positions the wire rod end 144 to be in contact or welding proximity of an end of one or more previously provided wire rods (not shown in Fig. 3) and when orienting the wire rod 142 to match the orientation of the corresponding edge in the mesh model. The wire rod 142 may be provided at an extended length, in that the wire rod 142 may be longer than needed to physically represent individual edges of the mesh model. As indicated above, the wire rod 142 may for example be obtained from a wire rod spool, optionally after being straightened by an apparatus configured to straighten the wire rod, i.e., a straightener.

Once the wire rod end 144 is brought into the desired position by the end effector 110, the wire rod end 144 may be welded to the end(s) of the previously provided wire rod(s). For this purpose, a laser (not shown in Fig. 3) may be provided which may be configured to emit a laser beam. The laser itself, or a laser beam delivery device which is configured to deliver the laser beam emitted by the laser, may be attached to the robotic arm at a position and/orientation in which the laser beam 122 is directed at the wire rod end 144. This way, the wire rod ends may be welded together to form a physical representation of a node of the mesh model. After the welding, the end effector 110 may withdraw from the welding site, and in particular, may move back along the direction of the wire rod 142. As the wire rod 142 is now attached to the object part manufactured so far, the friction force exerted by the wire rod guide 120 on to the wire rod 142 may be overcome and the wire rod guide 120 may slide back along the wire rod 142 to expose a segment of the wire rod which has a length which corresponds, at least in relative terms, to a length of the corresponding edge of the mesh model. The control system may then control the laser to cut the wire rod 142 to the desired length, after which the end effector 110 may continue to position and orient the wire rod still held by the end effector to establish a physical representation of a next edge of the mesh model. Once the end effector 110 runs out of wire rod, meaning that the length of wire rod held by the end effector 110 (if any) is insufficient to physically represent a new edge. the end effector 110 may move to a so-called wire station which may supply new wire rod. The end effector 110 may then pick-up the new wire rod or weld the new wire rod to a length of wire rod still held by the end effector 110.

It will be appreciated that the end effector shown in Fig. 3 and its operation is merely exemplary and that many alternatives are within reach of the skilled person based on this description. For example, instead of the guiding element, the end effector may be provided with a friction mount that allows friction-controlled axial movements but which prevents radial movement of the rod. Another example is that the end effector may be provided with a gripper configured to mechanically grip and release the rod. In another example, instead of obtaining wire rod from a wire rod spool, rods may be already provided at a desired length. For example, the wire station may store rods at one or several lengths which may correspond to the relative length(s) of the edges of the mesh model. With continued reference to the wire station, it is noted that such a wire station may also provide rods at different thicknesses. Such rods at different thicknesses may be used to physically represent edges of different thicknesses. For that purpose, the data or computer-readable instructions may indicate the thickness of an edge, which thickness may have been selected during the meshing for, for example, structural stability or surface quality reasons.

In some embodiments, computer vision may be used to detect deviations between the rods' positions and orientations with respect to the edges in the mesh model. This way, corrective measures may be taken, for example by updating the mesh map or adjusting the manipulator positioning. For example, after welding the end of the rod to the end of the at least one previous rod, computer vision may be used determine the relative position of said welded ends of the rods relative to the previously manufactured part of the object, for example using a camera which may be mounted to or nearby the robotic arm. The relative position of the welded ends of the rods may then be compared to a relative position of the corresponding node relative to the mesh model, and if a difference in said relative positions is deemed to be too large, e.g., by the difference exceeding a relative or absolute threshold, a next rod may be provided with an adapted length so as to compensate at least in part for the difference. The computer vision algorithm may be based on machine learning, in that it may employ a machine learned model to assess camera images of the object manufactured thus far. For example, the machine learned model may be a deep neural network comprising one or more convolutional network layers. Computer vision may likewise be used to steer the laser beam during the welding and/or cutting to provide a clean weld or cut. The laser steering may also make use of a machine learned model. Next to being used for real-time decision making, data obtained from the camera or the computer vision-based analysis of the camera images may be logged to document the manufacturing process.

It will be appreciated that the control system and manufacturing method may be used to manufacture objects at any scale and using mesh elements of any size. For example, edge lengths in the mm-scale can be used to create relatively smooth objects, whereas edge lengths in the cm-scale allow for large scale objects which are relatively sparse, meaning the weight-to-size ratio of the manufactured object may be relatively small.

While the manufacture of the object has thus far been described as a single robotic arm bringing each rod into the desired position and/or orientation for welding, it is also possible to keep the rod to be welded to the object at a static position and/or orientation while moving the object manufactured thus far into a desired relative position and/or orientation. Likewise, it is possible to move both the rod and the object relative to each other. For that purpose, the mechatronic positioning system may comprise several subunits, for example in form of several robotic arms. For example, a first robotic arm may hold the rod to be welded and a second robotic arm may hold the object manufactured thus far.

With continued reference to Fig. 1, it is noted that the processor subsystem 230 of the control system 200 may be embodied by a single CPU, such as a x86 or ARM-based CPU, but also by a combination of such CPUs and/or other types of processing units, such as microcontrollers. In general, the control system described in this specification may be embodied as, or in, a device or apparatus. The device or apparatus may comprise one or more (micro)processors which execute appropriate software. The processor subsystem of the control system may be embodied by one or more of these (micro)processors. Software implementing the functionality of the processor subsystem may have been downloaded and/or stored in a corresponding memory or memories, e.g., in volatile memory such as RAM or in non-volatile memory such as Flash. Alternatively, the processor(s) of the control system may be implemented in the device or apparatus in the form of programmable logic, e.g., as a Field-Programmable Gate Array (FPGA). Any input and/or output interfaces may be implemented by respective interfaces of the device or apparatus. Each functional unit of the control system may be implemented in the form of a circuit or circuitry. The control system may also be implemented in a distributed manner, e.g., involving different devices or apparatus. Specific examples of the control system include a suitably configured PC, laptop, workstation or server, a dedicated control system, for example implemented on a microcontroller or a programmable logic controller (PLC), a cloud hosted server, etc.

It is noted that any of the methods or steps described in this specification, for example in any of the claims, may be implemented on a computer as a computer-implemented method, as dedicated hardware, or as a combination of both. Instructions for the computer, e.g., executable code, may be stored on a computer-readable medium e.g., in the form of a series of machine-readable physical marks and/or as a series of elements having different electrical, e.g., magnetic, or optical properties or values. The executable code may be stored in a transitory or non-transitory manner. Examples of computer-readable mediums include memory devices, optical storage devices, integrated circuits, etc.

Examples, embodiments or optional features, whether indicated as nonlimiting or not, are not to be understood as limiting the invention as claimed.

Mathematical symbols and notations are provided for facilitating the interpretation of the invention and shall not be construed as limiting the claims.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or stages other than those stated in a claim. The article "a" or "an" preceding an element does not exclude the presence of a plurality of such elements. Expressions such as "at least one of" when preceding a list or group of elements represent a selection of all or of any subset of elements from the list or group. For example, the expression, "at least one of A, B, and C" should be understood as including only A, only B, only C, both A and B, both A and C, both B and C, or all of A, B, and C. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A method of manufacturing an object, comprising:
- accessing data or instructions which define a structure of a mesh model,
wherein the mesh model is a volumetric mesh model (340) comprising mesh elements which define a surface of the object and which fill at least part of an interior volume of the object,
wherein the mesh elements comprise edges which are connected to each other via respective nodes;
- providing a mechatronic positioning system (100) comprising an end effector (110);
- using the mechatronic positioning system, manufacturing the object as a physical representation of the mesh model by:
a. providing a rod (142) to physically represent an edge of the mesh model;
b. with the end effector, causing the rod to assume a position and orientation relative to a previously manufactured part of the object at which position an end (144) of the rod contacts or is in welding proximity of an end of at least one previous rod of the previously manufactured part of the object;
c. welding the end of the rod to the end of the at least one previous rod to physically establish a node connecting two or more edges of the mesh model;
and repeating steps a) - c) for respective edges and nodes of the mesh model to iteratively build up the physical representation of the mesh model.

2. The method according to claim 1, further comprising providing the rod (142) in form of a rod segment having a length which corresponds to a relative length of the edge in the mesh model.

3. The method according to claim 1, further comprising:
- providing the rod (142) at an extended length; and
- after welding the end (144) of the rod to the end of the at least one previous rod, cutting the rod to a length which corresponds to a relative length of the edge in the mesh model.

4. The method according to claim 3, further comprising cutting the rod (142) using a welding device (120) which is also used to weld the end (144) of the rod to the end of the at least one previous rod.

5. The method according to any one of claims 1 to 4, wherein the rod (142) is provided as a wire rod, for example obtained from a wire wound on a wire spool (140).

6. The method according to any one of claims 1 to 5, further comprising straightening (150) the rod before use.

7. The method according to any one of claims 1 to 6, further comprising welding the end (144) of the rod (142) to the end of the at least one previous rod using a welding device, such as a laser (120) configured to emit a laser beam or a welding torch configured for arc welding, for example for Tungsten Inert Gas (TIG) welding or Metal Inert Gas (MIG) welding.

8. The method according to claim 7, wherein the welding device (120) is held by or mounted to the mechatronic positioning system (100).

9. The method according to claim 7 or 8, wherein the welding device (120) is mounted to the mechatronic positioning system (100) at a mounting position and mounting orientation at which the welding device has a line of sight to the end of the rod held by the mechatronic positioning system.

10. The method according to any one of claims, further comprising generating the volumetric mesh model (340) of the object by:
- accessing a 3D model of the object, for example in form of a surface model;
- using a meshing algorithm, generating the volumetric mesh model of the object.

11. The method according to claim 10, further comprising obtaining at least one parameter defining a target strength and/or target surface quality of the mesh model and using the at least one parameter as a target in the meshing algorithm.

12. The method according to claim 10 or 11, further comprising generating a sequence in which rods of the physical representation of the object are to be welded to each other, wherein the sequence is generated such that intermediates of the object are structurally stable and/or the end effector is positionable to position and orient the end of the rod to contact or be in welding proximity of the end of the at least one previous rod without being obstructed by other previous rods of the previously manufactured part of the object.

13. An object which is manufactured as a physical representation of a volumetric mesh model (340), wherein the volumetric mesh model comprises mesh elements which define a surface of the object and which fill at least part of an interior volume of the object, wherein the mesh elements comprise edges which are connected to each other via respective nodes, wherein the edges are physically represented in the object by rods (142), wherein the rods are welded together at their respective ends (144) to physically establish the nodes connecting the edges of the mesh model.

14. A control system (200) to control a mechatronic positioning system to manufacture an object, comprising:
- an input interface (210) for accessing data or instructions which define a structure of a mesh model, wherein the mesh model is a volumetric mesh model (340) comprising mesh elements which define a surface of the object and which fill at least part of an interior volume of the object, wherein the mesh elements comprise edges which are connected to each other via respective nodes;
- a control interface (220) to the mechatronic positioning system (100);
- a processor subsystem (230) configured to, via the control interface, control the mechatronic positioning system to manufacture the object as a physical representation of the mesh model, wherein the mechatronic positioning system comprises an end effector (110), and wherein the control of the mechatronic positioning system comprises:
a. with the end effector, holding a rod (142), wherein the rod physically represents an edge of the mesh model;
b. with the end effector, causing the rod to assume a position and orientation relative to a previously manufactured part of the object at which position an end (144) of the rod contacts or is in welding proximity of an end of at least one previous rod of the previously manufactured part of the object; and
c. welding the end of the rod to the end of the at least one previous to physically establish a node connecting two or more edges of the mesh model;
and repeating steps a) - c) for respective edges and nodes of the mesh model to iteratively build up the physical representation of the mesh model.

15. A system comprising the control system (200) according to claim 14 and the mechatronic positioning system (100).
